# EUROPÄISCHE PATENTANMELDUNG

(11) **EP 4 450 465 A1**
(43) Veröffentlichungstag der Anmeldung: **23.10.2024**
(21) Anmeldenummer: 24157021.7
(22) Anmeldetag: 12.02.2024
(51) Int. Cl.: C02F 1/26, C02F 1/68, C02F 1/66, C02F 101/30, C02F 101/10

(54) **REAKTIVE FLÜSSIG-FLÜSSIG-EXTRAKTION VON BORSÄURE AUS EINER WÄSSRIGEN PHASE MIT HILFE VON 2-ETHYL-1,3-HEXANDIOL**

(30) Priorität: 18.04.2023 EP 23168457
(71) Anmelder: Bayer AG, 51373 Leverkusen (DE)
(72) Erfinder: Becker, Karsten, 51371 Leverkusen (DE); Brockkötter, Johannes Markus Josef, 40479 Düsseldorf (DE); Wellhöfer, Alexander, 4420 Liestal (CH); Falk, Carl Florian, 4053 Basel (CH)
(74) Vertreter: BIP Patents

(57) **Zusammenfassung**

Die vorliegende Anmeldung betrifft ein Verfahren zur Abtrennung von Borsäure aus einer Borsäurehaltigen wässrigen Phase durch reaktive Flüssig-flüssig-Extraktion unter Verwendung von 2-Ethyl-1,3-hexandiol als Reaktand und einem aromatischen Lösungsmittel als organischem Trägermedium.

## Beschreibung

### Technisches Gebiet

Die vorliegende Anmeldung betrifft ein Verfahren zur Abtrennung von Borsäure aus einer Borsäure-haltigen wässrigen Phase durch reaktive Flüssig-flüssig-Extraktion unter Verwendung von 2-Ethyl-1,3-hexandiol als Reaktand und einem aromatischen Lösungsmittel als organischem Trägermedium.

### Hintergrund der Erfindung

Borsäure wird u.a. für die Herstellung von Pflanzenschutzmitteln, Reinigungs-, Konservierungs- und Desinfektionsmitteln industriell verwendet. Da Borsäure gut wasserlöslich ist, fallen dabei große Mengen von Borsäure-haltigen Abwässern an, die aufwendig gereinigt werden müssen. Borsäure wurde von der European Chemicals Agency (ECHA) aufgrund ihrer Reproduktionstoxizität als besonders besorgniserregender Stoff eingestuft, so dass bei der Ableitung von Borsäure-haltigen Industrieabwässern in die Umwelt strenge Grenzwerte eingehalten werden müssen.

Für die Abtrennung von Borsäure aus Industrieabwässern bietet sich die reaktive Extraktion mit Hilfe von Polyolen an. Borsäure bildet mit Polyolen hydrophobe Komplexe, wodurch die Borsäure aus einer wässrigen Phase in eine organische Phase überführt werden kann (R. Grindstead, Ind. Eng. Chem. Prod. Res. Develop., 11 (4), 454-460 (1972)). Als geeignete Polyole kommen insbesondere 1,3-Diole und Catechole in Betracht (1,3-Diole: M. Matsumoto, K. Kondo, Separation Science and technology, 32 (5), 983-991 (1997), J. R. Kumar et al., Korean J. Met. Mater. 53 (8), 578-583 (2015), M. Karaplan, Solvent Extraction and Ion Exchange 22 (6), 897-911 (2004); Catechole: R. Pfizer, L. Babcock, Inorg. Chem. 16 (7), 1677-1681 (1977)).

Eine systematische Untersuchung zur Verwendung von 1,3-Diolen für die reaktive Extraktion von Borsäure aus wässrigen Lösungen wurde von Tural. et al. durchgeführt (B. Tural et al., Turk. J. Chem. 31, 163-170 (2007)). Dabei wurde insbesondere die Extraktionseffizienz abhängig vom verwendeten 1,3-Diol, organischem Trägermedium und pH-Wert untersucht. Gemäß dieser Studie wird das 1,3-Diol in hohem Überschuss eingesetzt (0,01 M Borsäure / 0,5 M Diol) und ein Phasenverhältnis organische Phase/Borsäure-haltige wässrige Phase von mindestens 1:1 gewählt. Mit 2-Ethyl-1,3-hexandiol als Reaktand wurden aufgrund seiner relativ hohen Wasserlöslichkeit - verglichen mit anderen untersuchten 1,3-Diolen, wie z.B. 1-Benzyl-2,3-dimethyl-1,3-propandiol - und seiner schlechten Löslichkeit in aliphatischen Lösungsmitteln jedoch nur bei Verwendung von Chloroform als organischem Trägermedium zufriedenstellende Ergebnisse erzielt. Chloroform ist jedoch ein CMR-Stoff (CMR = cancerogen mutagen reprotoxic) und würde aufgrund seiner Querlöslichkeit in Wasser das zu reinigende Abwasser kontaminieren. Aus diesem Grund kommt der Einsatz von Chloroform bei der Reinigung von Industrieabwässern nicht in Betracht.

Die Extraktion von sehr geringen Mengen Borsäure (mg/L) aus wässrigen Phasen mit Hilfe von einer ein Diol enthaltenden organischen Phase ist ebenfalls in der JP2016155103A, CN103482640A und JPH10249330A beschrieben. Die dort beschriebenen Verfahren eigenen sich jedoch nicht zur Abtrennung von größeren Mengen Borsäure aus Abwässern und verwenden zudem einen hohen Anteil an organischem Extraktionsmittel.

### Zusammenfassung der Erfindung

Aufgabe der vorliegenden Erfindung war daher, ein verbessertes Verfahren zur Abtrennung von Borsäure aus Abwässern bereitzustellen.

Diese Aufgabe wurde gelöst durch ein Verfahren zur reaktiven Flüssig-flüssig-Extraktion von Borsäure aus einer Borsäure-haltige wässrigen Phase,
wobei die Borsäure-haltige wässrige Phase mit einer organischen Phase enthaltend ein Diol in Kontakt gebracht wird, wodurch sich ein in der organischen Phase löslicher Diol-Borsäureester bildet und der Borsäuregehalt in der wässrigen Phase verringert wird,
das dadurch gekennzeichnet ist, dass das Diol 2-Ethyl-1,3-hexandiol ist und die dem Verfahren zugeführte organische Phase auf einer Mischung aus einem aromatischen Lösungsmittel und dem Diol basiert.

Es wurde überraschend gefunden, dass Borsäure durch Verwendung einer Kombination von 2-Ethyl-1,3-hexandiol als Reaktand und einem aromatischen Lösungsmittel, vorzugsweise Toluol, als organischem Trägermedium äußerst effektiv aus einer wässrigen Phase abgetrennt werden kann.

Gegenüber dem Verfahren gemäß Tural et al. hat das erfindungsgemäße Verfahren den Vorteil, dass der Reaktand (das 1,3-Diol) nur in geringem Überschuss eingesetzt werden muss und zudem die Menge an eingesetztem organischem Trägermedium gegenüber dem bekannten Verfahren deutlich reduziert werden kann. Es wurde gefunden, dass 2-Ethyl-1,3-hexandiol im Gegensatz zu anderen Polyolen, wie z.B. 2,2,4-Trimethyl-1,3-pentandiol und 4-tert-Butylcatechol, über eine deutlich höhere Löslichkeit im relevanten Temperaturbereich von 20-50°C in Toluol und eine äußerst geringe Wasserlöslichkeit verfügt. Dadurch ist es möglich, den Borsäuregehalt eines wässrigen Gemisches mit Hilfe von nur einer Extraktionsstufe um mehr als 65% und mit mindestens zwei Extraktionsstufen um ≥ 90% zu senken, ohne dass die wässrige Phase signifikant durch das 1,3-Diol verunreinigt wird.

Ein weiterer Vorteil des erfindungsgemäßen Verfahrens besteht darin, dass das Verfahren unempfindlich gegenüber der Anwesenheit von organischen Verunreinigungen in der wässrigen Phase ist und somit gleichzeitig mit der reaktiven Extraktion der Borsäure auch andere organischen Verunreinigungen aus der wässrigen Phase extrahiert werden können. Beispielsweise wurde gefunden, dass die wässrige Phase 11 Gew.% alkoholische Lösungsmittel wie Methanol enthalten kann, ohne dass dies zu einer kompetiven reaktiven Extraktion führt, welche die Effektivität der Borsäureextraktion beeinträchtigen könnte. Außerdem wurde gefunden, dass auch Phasenvermittler wie Tetrahydrofuran in geringen Mengen vorhanden sein können (z.B. 5 Gew.%), ohne dass die reaktive Borsäureextraktion beeinträchtigt wird. In einer bevorzugten Variante des erfindungsgemäßen Verfahrens kann außerdem das organische Trägermedium recycelt werden.

Aufgrund dieser Vorteile ist das erfindungsgemäße Verfahren für die Abtrennung von Borsäure aus industriellen Abwässern besonders geeignet.

### Kurze Beschreibung der Zeichnungen

Figur 1 zeigt eine bevorzugte Ausführungsform des erfindungsgemäßen Verfahrens. Hier werden die wässrige Phase und die organische Phase in einem kontinuierlichen Verfahren im Gegenstrom durch eine zweistufige Mixer-Settler-Kaskadegeführt.
Figur 2 zeigt eine weitere bevorzugten Ausführungsform des erfindungsgemäßen Verfahrens. Hier werden die wässrige Phase und die organische Phase in einem kontinuierlichen Verfahren im Kreuzstrom durch eine zweistufige Mixer-Settler-Kaskade geführt.

### Detaillierte Beschreibung der Erfindung

Erfindungsgemäß wird der Borsäuregehalt der wässrigen Phase durch reaktive Flüssig-flüssig-Extraktion verringert, in dem die Borsäure-haltige wässrige Phase mit einer organischen Phase enthaltend 2-Ethyl-1,3-hexandiol in Kontakt gebracht wird. An der Phasengrenze bildet die Borsäure mit dem 2-Ethyl-1,3-hexandiol einen hydrophoben Komplex (Ester), der sich in der organischen Phase löst und dadurch in diese übergeht. Dies ist in Schema 1 gezeigt:

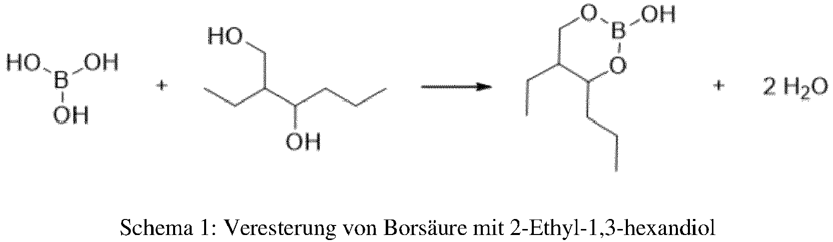

Die erfindungsgemäß einzusetzende Menge an 2-Ethyl-1,3-hexandiol ist demnach abhängig vom Borsäuregehalt der wässrigen Phase und vom Volumenverhältnis zwischen wässriger Phase und organischer Phase. Vorteilhaft ist es, möglichst wenig aromatisches Lösungsmittel und möglichst wenig 2-Ethyl-1,3-hexandiol einzusetzen.

Vorzugweise beträgt das Volumenverhältnis wässrige Phase / organische Phase in dem erfindungsgemäßen Verfahren mindestens 1:1, besonders bevorzugt mindestens 2:1, ganz bevorzugt mindestens 3:1 und insbesondere bevorzugt mindestens 5.1. Weiterhin insbesondere bevorzugt ist ein Volumenverhältnis wässrige Phase / organische Phase im Bereich von 5:1 bis 20:1.

Erfindungsgemäß besonders vorteilhaft ist, wenn das 2-Ethyl-1,3-hexandiol gegenüber der Borsäure nur wenig überstöchiometrisch eingesetzt wird. Vorzugweise beträgt das molare Verhältnis von 2-Ethyl-1,3-hexandiol zu Borsäure höchstens 5 : 1, besonders bevorzugt höchstens 3:1 und ganz besonders bevorzugt liegt das molare Verhältnis von 2-Ethyl-1,3-hexandiol zu Borsäure im Bereich von 1,05 : 1 bis 2,5 : 1.

Erfindungsgemäß basiert die organische Phase auf einer Mischung aus dem Diol und einem aromatischen Lösungsmittel. Geeignete aromatische Lösungsmittel sind nicht-halogenierte aromatische Lösungsmittel wie Toluol, Xylol und Benzol. Besonders bevorzugt ist Toluol.

"Basiert" heißt in diesem Zusammenhang, dass die Mischung aus aromatischem Lösungsmittel und dem Diol Hauptbestandteil der organischen Phase ist. Vorzugsweise besteht die in das erfindungsgemäße Verfahren eingeleitete organische Phase zu mindestens 80 Gew.%, besonders bevorzugt mindestens 90 Gew.% aus dem aromatischen Lösungsmittel, vorzugsweise Toluol, und dem Diol. Ganz besonders bevorzugt besteht die dem Verfahren zugeführte organische Phase aus dem aromatischen Lösungsmittel, vorzugsweise Toluol, und 2-Ethyl-1,3-hexandiol.

Die Verfahrensbedingungen im erfindungsgemäßen reaktiven Extraktionsverfahren sind derart, dass eine Veresterung stattfindet und gleichzeitig der gebildete Borsäureester aus der wässrigen Phase in die organische Phase extrahiert wird. Somit wird eine wässrige Phase mit einem verringerten Borsäuregehalt im Vergleich zu der wässrigen Ausgangsmischung und eine organische Phase gebildet, die den 2-Ethyl-1,3-hexandiol-Borsäureester und unverestertes 2-Ethyl-1,3-hexandiol umfasst. Wenn zusätzliche organische Verunreinigungen in der wässrigen Ausgangsmischung vorhanden sind, werden diese gleichzeitig zumindest teilweise aus der wässrigen Phase in die organische Phase extrahiert.

Vorzugsweise beträgt der Borsäuregehalt der dem Verfahren zugeführten Borsäure-haltigen wässrigen Phase höchstens 10 Gew.%, besonders bevorzugt höchstens 7,5 Gew.%, ganz besonders bevorzugt höchstens 5 Gew.%.

Vorzugsweise beträgt der Borsäuregehalt der dem Verfahren zugeführten Borsäure-haltigen wässrigen Phase mindestens 0,5 Gew.%, besonders bevorzugt mindestens 1 Gew.%, ganz besonders bevorzugt mindestens 1,5 Gew.%.

Vorzugsweise liegt der Borsäuregehalt der dem Verfahren zugeführten Borsäure-haltigen wässrigen Phase zwischen 0,5 und 10 Gew.%, besonders bevorzugt zwischen 1 und 7,5 Gew.% und ganz besonders bevorzugt zwischen 1,5 und 5 Gew.%.

Durch das erfindungsgemäße Verfahren kann bereits mit Hilfe von nur einer Extraktionsstufe eine Abreicherung an Borsäure von mindestens 65% erzielt werden. Bei Verwendung von zwei oder mehr Extraktionssstufen kann eine Abreicherung von mehr als 90% oder sogar mehr als 95% erzielt werden.

Vorzugsweise beträgt die Abreicherung der Borsäure in der das Verfahren verlassenden wässrigen Phase gegenüber der dem Verfahren zugeführten wässrigen Phase mindestens 80%, besonders bevorzugt mindesten 90%, ganz besonders bevorzugt mindestens 95%.

Damit die Extraktion ablaufen kann, sollten sowohl die organische als auch die wässrige Phase in flüssigem Zustand vorliegen. Vorzugsweise wird das erfindungsgemäße Verfahren bei einer Temperatur im Bereich von 15°C bis 80°C, besonders bevorzugt im Bereich von 40°C bis 75°C durchgeführt. Der Verfahrensdruck entspricht vorzugsweise dem Umgebungsdruck.

Das erfindungsgemäße reaktive Extraktionsverfahren kann als Chargenverfahren oder als kontinuierliches Verfahren durchgeführt werden. Bevorzugt werden die wässrige Borsäure-haltige Phase und die organische Phase enthaltend das 2-Ethyl-1,3-hexandiol dabei im Gegenstrom oder Kreuzstrom einer ein- oder mehrstufigen Extraktion unterzogen.

Geeignete Extraktionsapparate für das erfindungsgemäße Extraktionsverfahren sind aus ein oder mehreren Mixer-Settlern, Rührkesseln mit Abscheider, Extraktionskolonnen oder Zentrifugalextraktoren oder Kombinationen daraus aufgebaut. Eine zwei- oder mehrstufige Extraktion kann durch eine serielle Verschaltung von zwei oder mehr einstufigen Extraktionsapparaten, wie z.B. Mixer-Settler oder durch Einsatz von Extraktionsapparaten mit zwei oder mehr theoretischen Trennstufen, wie z.B. eine Extraktionskolonne, erzielt werden.

In einer bevorzugten Variante des erfindungsgemäßen Verfahrens werden die wässrige Borsäure-haltige Phase und die organische Phase enthaltend das 2-Ethyl-1,3-hexandiol im Gegenstrom oder Kreuzstrom einer mindestens zweistufigen Extraktion unterzogen. Dabei ist eine kontinuierliche Gegenstromführung unter Verwendung einer mindestens zweistufigen Mixer-Settler-Kaskade ganz besonders bevorzugt.

Der 2-Ethyl-1,3-hexandiol-Borsäure-Ester kann durch Absenkung des pH-Wertes wieder gespalten werden (Esterverseifung). Daher darf der pH-Wert der wässrigen Phase während des erfindungsgemäßen Verfahrens 8,0 nicht überschreiten. Vorzugsweise beträgt der pH-Wert der dem Verfahren zugeführten wässrigen Phase 6,0 bis 8,0.

In einer bevorzugten Variante des erfindungsgemäßen Verfahrens wird wenigstens ein Teil des aromatischen Lösungsmittels, vorzugsweise mindestens 80%, recycelt, d.h. aufgereinigt und wieder dem Extraktionsverfahren zugeführt. Dazu wird die den Diol-Borsäureester enthaltene organische Phase abgetrennt und einem destillativen Verfahren zugeführt. Das durch das destillative Verfahren abgetrennte aromatische Lösungsmittel kann anschließend mit frischem 2-Ethyl-1,3-hexandiol versetzt und dem Verfahren wieder zugeführt werden. Geeignete destillative Verfahren sind Destillation und Rektifikation.

In einer besonders bevorzugten Ausführungsform des erfindungsgemäßen Verfahrens
- beträgt das Volumenverhältnis wässrige Phase / organische Phase mindestens 2:1,
- beträgt das molare Verhältnis von 2-Ethyl-1,3-hexandiol zu Borsäure höchstens 3 : 1,
- beträgt der Borsäuregehalt der dem Verfahren zugeführten Borsäure-haltigen wässrigen Phase zwischen 0,5 und 10 Gew.%.

Bevorzugt ist gemäß dieser besonders bevorzugten Ausführungsform ein kontinuierliches Verfahren oder Chargenverfahren, bei dem die Borsäure-haltige wässrige Phase im Gegenstrom oder Kreuzstrom mit der organischen Phase enthaltend das 2-Ethyl-1,3-hexandiol in Kontakt gebracht wird. Weiterhin bevorzugt wird gemäß dieser besonders bevorzugten Ausführungsform Toluol als organisches Lösungsmittel eingesetzt.

### Detaillierte Beschreibung der Zeichnungen

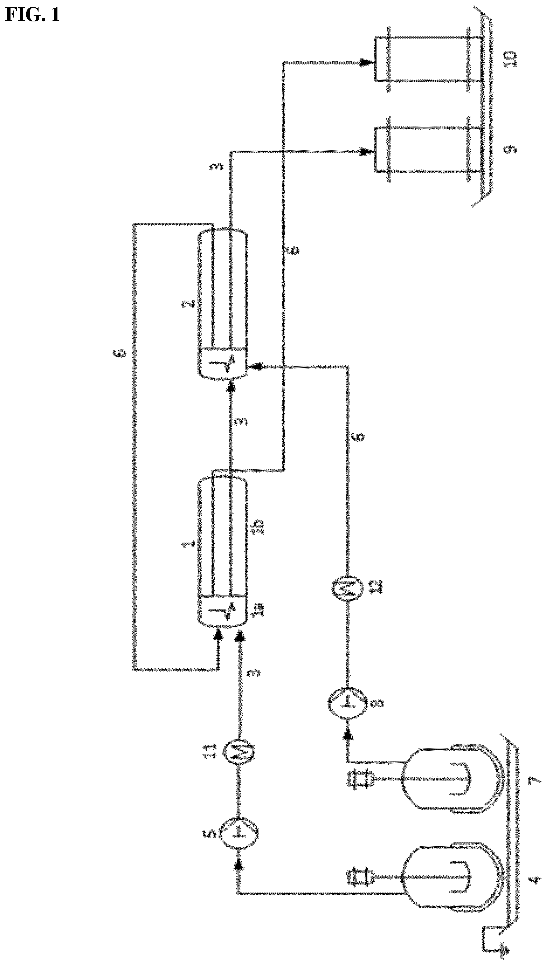

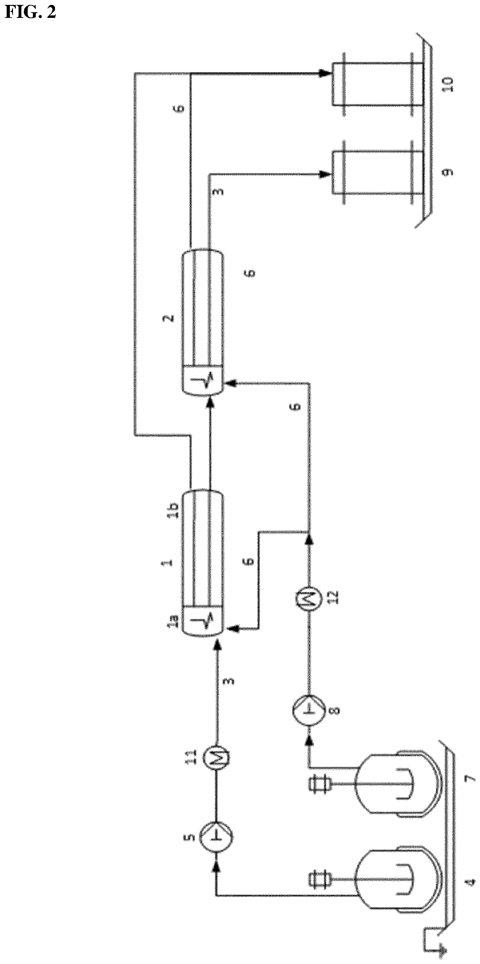

Die Erfindung wird beispielhaft unter Bezugnahme auf die Figuren 1 und 2 weiter veranschaulicht.

In Figur 1 ist eine Ausführungsform des erfindungsgemäßen Verfahrens gezeigt. Für das Extraktionsverfahren kommt eine zweistufige Mixer-Settler-Kaskade zum Einsatz (siehe Mixer Settler 1 und Mixer-Settler 2). Borsäure-haltiges Abwasser (3) wird der Glasvorlage 4 entnommen und über eine Dosierpumpe (5) dem Mixer-Settler der Stufe 1 (1) zugeführt. Dort wird die wässrige Phase mit der bereits an Borsäureester angegereicherten organischen Phase (6) aus der zweiten Stufe der Mixer-Settler-Kaskade (2) in der Mischzone (1a) ineinander dispergiert. In der Settler Zone (1b) setzen sich die beiden Phasen im Erdschwerefeld ab. Die Phasen 3 und 6 werden am Ende der Settlerzone separat dem Apparat entnommen. Die wässrige Phase 3 wird mit frischer organischer Phase 6, die aus einer Glasvorlage (7) entnommen und über die Dosierpumpe 8 gefördert wird, in der Stufe 2 der Mixer-Settler-Kaskade (2) kontaktiert. Anschließend werden die Phasen erneut separiert und den Behältnissen 9 und 10 zugeführt. Das System wird thermostatisiert betrieben (siehe Thermostate 11 und 12).

In Figur 2 ist eine weitere Ausführungsform des erfindungsgemäßen Verfahrens gezeigt. Hierbei handelt es sich um eine zweistufige Kreuzstromextraktion. Die Mixer Settler 1 und 2 sind für die wässrige Phase 3 seriell geschaltet. Borsäure-haltiges Abwasser (3) wird der Glasvorlage 4 entnommen und über eine Dosierpumpe (5) dem Mixer-Settler der Stufe 1 (1) zugeführt. Die wässrige Phase (3) tritt hierbei in die erste Stufe (1) ein und wird hier mit frischer organischer Phase (6), die aus einer Glasvorlage (7) entnommen und über die Dosierpumpe 8 gefördert wird, kontaktiert. Nachdem die Phasen in der Mischzone (1a) ineinander dispergiert wurden, werden die Phasen (3, 6) entsprechend der Erdschwere voneinander separiert. Während die wässrige Phase (3) in die zweite Stufe (2) geführt wird, wird die organische Phase (6) aus Stufe 1 (1) aus dem Verfahren geführt und in einem Behältnis (10) gesammelt. Die wässrige Phase wird im Mixer Settler der Stufe 2 (2) mit frischer organischer Phase (6) kontaktiert und ineinander dispergiert. Anschließend werden die Phasen separiert und den Behältnissen 9 und 10 zugeführt. Das System wird thermostatisiert betrieben (siehe Thermostate 11 und 12).

### Beispiele

Die Erfindung wird anhand der folgenden nicht einschränkenden Beispiele weiter veranschaulicht.

### Beispiele 1 und 2: Kontinuierliche Gegenstromextraktion

Die Extraktion erfolgte über eine kontinuerlich betriebene, zweistufige Mixer-Settler Kaskade im Miniplantmaßstab wie in Figur 1 gezeigt, wobei die wässrige Phase und die organische Phase im Gegenstrom geführt wurden:
Die beiden Phasen wurden jeweils in einer doppelwandigen 51 Glasvorlage temperiert und gerührt. Als Rührer wurde ein 4-stufiger Kreuzbalkenrührer mit Stromstörern eingesetzt. Die beiden Phasen wurden jeweils über eine Dosierpumpe aus der Vorlage in den jeweiligen Mixer-Settler der Stufe 1 bzw. 2 gefördert.

Die wässrige borsäurehaltige Phase wurde in den Mixer-Settler der Stufe 1 (1) gefördert und dort mit der organischen Phase aus dem Mixer-Settler der Stufe 2 kontaktiert. Als Mischer diente eine NORMAG-Glaspumpe (magnetgekoppelter, PTFE-ummantelter Pumpenläufer), die gleichzeitig auch die Förderung der gemischten Phasen in den Settler vornahm. Der Antrieb der einzelnen Mischer erfolgte über Transmissionsriemen durch einen Motor mit stufenloser Drehzahlregulierung und hoher Drehzahlkonstanz. Zur stabilen Einstellung der Phasengrenzschicht wurde ein handgeregelter, verstellbarer Überlauf für die spezifisch schwere Phase eingebaut. Die Temperaturmessung jeder Stufe erfolgte im Abscheidebereich. Die Probennahme erfolgte aus einem Stutzen im Abscheiderbereich. Das Betriebsvolumen der beiden Mixer Settler Stufen betrug jeweils ca. 170 ml. Die Apparatur wurde kontinuierlich im Gegenstrom betrieben.

Als Nachlagen dienten zwei nicht beheizte 10L Gebinde, die auf Waagen standen. Die Prozessparameter, sowie die Messwerte wurden mit einem Hitec Zang System aufgezeichnet.

### Material und Methoden:

Für die experimentelle Durchführung der Beispiele 1 und 2 wurden die Chemikalien entsprechend der Tabelle 1 verwendet. Als organische Phase wurde jeweils eine Lösung von 2-Ethyl-1,3-hexandiol in Toluol verwendet.

Zur Evaluierung einer kontinuierlichen Gegenstromapparatur wurden die Versuchsparameter entsprechend der Tabelle 2 eingestellt und übernommen. Bei Beispiel 2 enthielt die dem Verfahren zugeführte Borsäure-haltige wässrige Phase zusätzlich Methanol (11 Gew.%) und Tetrahydofuran (5 Gew.%). Phasenvermittler wie Methanol oder Tetrahydrofuran finden sich in diversen chemischen Prozessen als Nebenkomponenten wieder. In extraktiven Prozessen agieren sie als Phasenvermittler und sind nach Phasentrennung sowohl in der wässrigen als auch in der organischen Phase zu finden. Dieser Einfluss der Phasenvermittler sollte in dem Versuch evaluiert werden und die Robustheit des Prozesses gezeigt werden. Ferner wurde im Beispiel 2 die Betriebstemperatur gesenkt, um den Einfluss zu bewerten.

Nach Sicherstellen der Stationarität wurden die Proben der wässrigen und organischen Phase nach jeder Settlerstufe gezogen und auf Bor mit induktiv gekoppelte Plasma-Emissionsspektroskopie (ICP-OES) vermessen. Hieraus wurde die Ausbeute bestimmt.

**Tabelle 1: Chemikalienliste**

| **Name** | **Reinheit** |
|---|---|
| Methanol | 99,8 |
| Tetrahydrofuran (THF) | 99,7 |
| Toluol | 99,7 |
| 2-Ethyl-1,3-hexandiol | 99,0 |
| Borsäurehaltiges Betriebswasser | - |

**Tabelle 2: Versuchsparameter für die Gegenstromexperimente**

| **Versuchsparameter** | | |
|---|---|---|
| | **Beispiel 1** | **Beispiel 2** |
| Volumenstrom wässrige Phase | 15,50 ml/min | 15,50 ml/min |
| Volumenstrom organische Phase | 3,4ml/min | 3,4ml/min |
| Temperatur | 60 °C | 45 °C |
| Borsäurekonzentration in wässriger Phase | 3,48 Gew.% | 2,88 Gew.% |
| Diolkonzentration in organischer Phase | 49,26 Gew.% | 65,73 Gew.% |
| Molares Verhältnis Diol / Borsäure | 0,94 M : 1 M | 1,65 M: 1 M |
| Gespikte Methanolkonzentration | Nicht gespikt | 11 Gew.% |
| Gespikte THF Konzentration | Nicht gespikt | 5 Gew.% |

### Ergebnisse:

Die Ergebnisse sind in den Tabellen 3 und 4 gezeigt:

**Tabelle 3: Ergebnisse zu Beispiel 1**

| | Anfangswert | Wert nach einer Extraktionsstufe¹⁾ | Endwert |
|---|---|---|---|
| Borsäuregehalt der wässrigen Phase | 3,48 Gew.% | 2,34 Gew.% | 0,58 Gew.% |
| Borsäuregehalt der organischen Phase | - | 9,60 Gew.% | 16,20 Gew.% |

| | | | |
|---|---|---|---|
| ¹⁾: Für die wässrige Phase ist dies der Wert am Ausgang von Mixer-Settler 1 und für die organische Phase der Wert am Ausgang von Mixer-Settler 2. ²⁾: Die Borsäure liegt hier in Form des Borsäure-Diol-Esters vor. Die Gew.%-Angabe bezieht nur auf den Borsäure-Anteil. | | | |

**Tabelle 4: Ergebnisse zu Beispiel 2**

| | Anfangswert | Wert nach einer Extraktionsstufe¹⁾ | Endwert |
|---|---|---|---|
| Borsäuregehalt der wässrigen Phase | 2,88 Gew.% | 0,68 Gew.% | 0,05 Gew.% |
| Borsäuregehalt der organischen Phase²⁾ | - | 1,32 Gew.% | 9,60 Gew.% |

| | | | |
|---|---|---|---|
| ¹⁾: Für die wässrige Phase ist dies der Wert am Ausgang von Mixer-Settler 1 und für die organische Phase der Wert am Ausgang von Mixer-Settler 2. ²⁾: Die Borsäure liegt hier in Form des Borsäure-Diol-Esters vor. Die Gew.%-Angabe bezieht nur auf den Borsäure-Anteil. | | | |

Aus den Tabellen 3 und 4 geht hervor, dass die Borsäure in der organischen Phase selektiv durch den Einsatz des Diols aufkonzentriert wurde, während die Borsäurekonzentration in der wässrigen Phasen gesenkt wurde. Die Borsäureausbeute für die zweistufe Gegenstromextraktion beträgt für Beispiel 1 85% und für Beispiel 2 98%

Aus Tabelle 4 geht außerdem hervor, dass der Anteil an Phasenvermittlern (Methanol + THF) keinen negativen Einfluss auf die Extraktionsausbeute bzw. auf die Komplexbildung hatte. Die Komplexbildung findet unabhängig von der physikalischen Extraktion statt. Somit ist das Verfahren robust gegenüber diesen Mengen an Phasenvermittlern. Ferner ist festzuhalten, dass die Komplexbildung auch bei niedrigeren Temperaturen bestimmungsgemäß erfolgt.

### Beispiel 3: Kreuzstromextraktion unter Verwendung eines Rührkessels

Hierzu wurde ein Schüttelgefäß (Doppelwandig, temperatiert, internes Volumen 500 ml, mit Stickstoff überlagert) verwendet, welches auf einem pneumatisch betriebenen Schlitten verbaut war und dazu diente, durch horizonale Bewegungen die organische Phase in die wässrige Phase zu dispergieren. Die verwendeten Versuchsparameter für das Beispiel 3 sind der Tabelle 5 zu entnehmen. Als organische Phase wurde eine Lösung von 2-Ethyl-1,3-hexandiol in Toluol verwendet.

**Tabelle 5: Versuchsparameter für die Kreuzstromextraktion im Rührkessel**

| | **Beispiel 3** |
|---|---|
| Menge wässrige Phase | 340 g |
| Menge organische Phase gesamt | 58 g |
| Temperatur | 60 °C |
| Borsäurekonzentration in wässriger Phase | 4.08 Gew.% |
| Diolkonzentration in organischer Phase | 72 Gew.% |
| Molares Verhältnis Diol / Borsäure¹⁾ | 1,2M : 1M |
| Aufteilung der organischen Phase auf die Extraktionsstufen | 50 Gew.% / 50 Gew.% |
| Gespikte Methanolkonzentration | Nicht gespikt |
| Gespikte THF Konzentration | Nicht gespikt |

| | |
|---|---|
| ¹⁾ Das molare Verhältnis bezieht sich auf den Bilanzraum der gesamten zweistufigen Kreuzextraktion | |

Nachdem die Phasen ineinander dispergiert wurden (Schütteldauer 10 min) wurde die Vermischung gestoppt. Die Phasen setzten sich im Erdschwerefeld voneinander ab. Die Phasen wurden voneinander separiert und analysiert. Mit diesem Arbeitsschritt wurde eine erste Extraktionsstufe experimentell simuliert.

Für die zweite Extraktionsstufe wurde das bereits an Borsäure verarmte Abwasser mit frischem Lösemittel (Toluol) in Kontakt gebracht. Die Phasen wurden erneut für 10 min gemischt und nach dem Absetzen voneinander getrennt und separat beprobt. Die Ergebnisse sind in Tabelle 6 gezeigt.

**Tabelle 6: Ergebnisse zu Beispiel 3**

| | Anfangswert | Wert nach der 1. Extraktionsstufe | Endwert |
|---|---|---|---|
| Borsäuregehalt der wässrigen Phase | 4,08 Gew.% | 1,62 Gew.% | 0,3 Gew.% |
| Borsäuregehalt der organischen Phase¹⁾ | - | 18 Gew.% | 7,8 Gew.% |

| | | | |
|---|---|---|---|
| ¹⁾: Die Borsäure liegt hier in Form des Borsäure-Diol-Esters vor. Die Gew.%-Angabe bezieht nur auf den Borsäure-Anteil. | | | |

Zu erkennen ist, dass die Borsäure pro Stufe abgereichert wird. Die Ausbeute der zweistufen Kreuzstromextraktion beträgt 92,6 Gew.%. Das Verfahren der Kreuzextraktion ist somit als geeignet zu erachten, um die Borsäure abzureichern.

### Beispiel 4: Einstufige Extraktion im Rührkessel

In Beispiel 4 wird das selbe experimentelle Setup wie in Beispiel 3 verwendet, abgesehen davon, dass ein Schüttelgefäß mit einem internen Volumen von 250 ml verwendet wird. Beispiel 4 soll im Vergleich zu den Beispielen 1-3 hervorheben, dass mit einem geeigneten molaren Verhältnis (Diol/Borsäure) bereits bei einer nur einstufigen Extraktion eine hohe Abreicherung der Borsäure erreicht werden kann. Als organische Phase wird eine Mischung aus Toluol und 2-Ethyl-1,3-hexandiol verwendet. Die Versuchsparameter können Tabelle 7 entnommen werden.

**Tabelle 7: Versuchsparameter für die Einstufige Extraktion im Rührkessel**

| | **Beispiel 4** |
|---|---|
| Menge wässrige Phase | 170,45 g |
| Menge organische Phase je Stufe | 51,03 g |
| Temperatur | 60 °C |
| Borsäurekonzentration in wässriger Phase | 3,3 Gew.% |
| Diolkonzentration in organischer Phase | 71,04 Gew.% |
| Molares Verhältnis Diol / Borsäure | 2,7M : 1M |
| Gespikte Methanolkonzentration | Nicht gespikt |
| Gespikte THF Konzentration | Nicht gespikt |

Das Beispiel verdeutlicht, dass man flexibel über die Anpassung des molaren Verhältnisses (Diol/Borsäure) auch Extraktionsausbeuten von über 90% erhalten kann. In diesem Beispiel beträgt die Ausbeute 91,2 Gew.%. Das Ergebnis ist in Tabelle 8 zusammengefasst. Der einstufige Rührkessel kann somit neben der Kreuz- und Gegenstromextraktion als ein geeigneter Apparat angesehen werden.

**Tabelle 8: Ergebnisse zu Beispiel 4**

| | Anfangswert | Wert nach der 1. Extraktionsstufe |
|---|---|---|
| Borsäuregehalt der wässrigen Phase | 3,3 Gew.% | 0,28 Gew.% |
| Borsäuregehalt der organischen Phase¹⁾ | - | 9,6 Gew.% |

| | | |
|---|---|---|
| ¹⁾: Die Borsäure liegt hier in Form des Borsäure-Diol-Esters vor. Die Gew.%-Angabe bezieht nur auf den Borsäure-Anteil. | | |

### Beispiele 5 bis 7 (Vergleichsbeispiele)

Die Durchführung der Beispiele erfolgt analog Beispiel 4. Beispiel 5 ist eine Wiederholung von Beispiel 4 mit leicht veränderten Parametern unter Verwendung von 2-Ethyl-1,3-hexandiol (erfindungsgemäß). Zum Vergleich werden analoge Versuche unter Verwendung der im Stand der Technik beschriebnen Diole 2,2,4-Trimethyl-1,3-pentandiol und 2-Butyl-2-ethyl-1,3-propandiol durchgeführt (Beispiel 6 und 7). Die Versuchsparameter können Tabelle 9 entnommen werden. Es wird jeweils die maximal in Toluol lösliche Menge an 2,2,4-Trimethyl-1,3-pentandiol und 2-Butyl-2-ethyl-1,3-propandiol verwendet. Es können allerdings nur relativ geringe Mengen der Diole eingesetzt werden, da ihre Löslichkeit in Toluol begrenzt und die Löslichkeitsgrenze somit schnell erreicht ist. Für die Versuche wird der flüssige Überstand der Einwaage verwendet, d.h. mit Diol gesättigtes Toluol.

**Tabelle 9: Versuchsparameter für die Einstufige Extraktion im Rührkessel**

| | **Beispiel 5 2-Ethyl-1,3-hexandiol** | **Beispiel 6 2,2,4-Trimethyl-1,3-pentandiol (Vergleich)** | **Beispiel 7 2-Butyl-2-ethyl-1,3-propandiol (Vergleich)** |
|---|---|---|---|
| Menge wässrige Phase | 170,25 g | 170,44 g | 170,61 g |
| Menge organische Phase je Stufe | 50,42 g | 16,75 g | 33,09 g |
| davon Menge Toluol | 14,83 g | 14,97 g | 14,89 g |
| davon Menge Diol | 36,29 g | 2,09 g* | 19,05 g* |
| Temperatur | 60 °C | 60 °C | 60 °C |
| Borsäurekonzentration in wässriger Phase | 3,06 Gew.% | 3,06 Gew.% | 3,06 Gew.% |
| Diolkonzentration in organischer Phase | 71,98 Gew.% | 12,48 Gew.% | 57,58 Gew.% |
| Molares Verhältnis Diol / Borsäure | 2,95M : 1M | 0,17M : 1M | 1,40M : 1M |
| Gespikte Methanolkonzentration | Nicht gespikt | Nicht gespikt | Nicht gespikt |
| Gespikte THF Konzentration | Nicht gespikt | Nicht gespikt | Nicht gespikt |

| | | | |
|---|---|---|---|
| (*Löslichkeitsgrenze des jeweiligen Diols in Toluolphase erreicht) | | | |

Die Ergebnisse der Versuche sind in Tabelle 10 zusammengefasst. Es ist deutlich ersichtlich, dass nur mit dem erfindungsgemäßem Diol 2-Ethyl-1,3-hexandiol eine gute Ausbeute und somit hohe Abreicherung an Borsäure möglich ist.

**Tabelle 10: Ergebnisse zu Beispiel 5, 6 und 7**

| | Beispiel 5 | Beispiel 6 (Vergleich) | Beispiel 7 (Vergleich) |
|---|---|---|---|
| Borsäuregehalt der wässrigen Phase vor der Extraktion | 3,06 Gew.% | 3,06 Gew.% | 3,06 Gew.% |
| Borsäuregehalt der wässrigen Phase nach der 1. Extraktionsstufe | 0,25 Gew.% | 2,82 Gew.% | 1,08 Gew.% |
| Borsäuregehalt der organischen Phase¹⁾ nach der 1. Extraktionsstufe | 10,20 Gew.% | 4,74 Gew.% | 11,40 Gew.% |
| Ausbeute | 92,23 | 8,82 | 65,42 |

| | | | |
|---|---|---|---|
| ¹⁾: Die Borsäure liegt hier in Form des Borsäure-Diol-Esters vor. Die Gew.%-Angabe bezieht nur auf den Borsäure-Anteil. | | | |

## Patentansprüche

1. Verfahren zur reaktiven Flüssig-flüssig-Extraktion von Borsäure aus einer Borsäure-haltigen wässrigen Phase,
wobei die Borsäure-haltige wässrige Phase mit einer organischen Phase enthaltend ein Diol in Kontakt gebracht wird, wodurch sich ein in der organischen Phase löslicher Diol-Borsäureester bildet und der Borsäuregehalt in der wässrigen Phase verringert wird,
**dadurch gekennzeichnet, dass** das Diol 2-Ethyl-1,3-hexandiol ist und die dem Verfahren zugeführte organische Phase auf einer Mischung aus einem aromatischen Lösungsmittel und dem Diol basiert und das Volumenverhältnis wässrige Phase / organische Phase mindestens 1:1 beträgt.

2. Verfahren gemäß Anspruch 1, **dadurch gekennzeichnet, dass** das Volumenverhältnis wässrige Phase / organische Phase mindestens 3:1 beträgt.

3. Verfahren gemäß Anspruch 1 oder 2, **dadurch gekennzeichnet, dass** das molare Verhältnis von 2-Ethyl-1,3-hexandiol zu Borsäure höchstens 3 : 1 beträgt.

4. Verfahren gemäß einem der Ansprüche 1 bis 3, **dadurch gekennzeichnet, dass** als aromatisches Lösungsmittel Toluol eingesetzt wird.

5. Verfahren gemäß einem der Ansprüche 1 bis 4, welches ein kontinuierliches Verfahren oder Chargenverfahren ist.

6. Verfahren gemäß einem der Ansprüche 1 bis 5, wobei die Borsäure-haltige wässrige Phase im Gegenstrom oder Kreuzstrom mit der organischen Phase enthaltend das 2-Ethyl-1,3-hexandiol in Kontakt gebracht wird.

7. Verfahren nach einem der Ansprüche 1 bis 6, welches bei einer Temperatur im Bereich von 15°C bis 80°C durchgeführt wird.

8. Verfahren nach einem der Ansprüche 1 bis 7, **dadurch gekennzeichnet, dass** die wässrige Phase einen pH Wert von höchstens 8,0 aufweist.

9. Verfahren gemäß einem der Ansprüche 1 bis 8, **dadurch gekennzeichnet, dass** der Borsäuregehalt der dem Verfahren zugeführten Borsäure-haltigen wässrigen Phase höchstens 10 Gew.% beträgt.

10. Verfahren gemäß einem der Ansprüche 1 bis 9, **dadurch gekennzeichnet, dass** der Borsäuregehalt der dem Verfahren zugeführten Borsäure-haltigen wässrigen Phase mindestens 0,5 Gew.% beträgt.

11. Verfahren nach einem der Ansprüche 1 bis 10, **dadurch gekennzeichnet, dass** die den Diol-Borsäureester enthaltene organische Phase abgetrennt wird und wenigstens ein Teil des darin enthaltenen aromatischen Lösungsmittels durch ein destillatives Verfahren gereinigt und wieder dem Verfahren zugeführt wird.

12. Verfahren nach Anspruch 1, **dadurch gekennzeichnet, dass**
- das Volumenverhältnis wässrige Phase / organische Phase mindestens 2 : 1 beträgt,
- das molare Verhältnis von 2-Ethyl-1,3-hexandiol zu Borsäure höchstens 3 : 1 beträgt, und
- der Borsäuregehalt der dem Verfahren zugeführten Borsäure-haltigen wässrigen Phase zwischen 0,5 und 10 Gew.% beträgt.

13. Verfahren nach Anspruch 12, **dadurch gekennzeichnet, dass** die Borsäure-haltige wässrige Phase im Gegenstrom oder Kreuzstrom mit der organischen Phase enthaltend das 2-Ethyl-1,3-hexandiol in Kontakt gebracht wird.

14. Verfahren nach Anspruch 12 oder 13, **dadurch gekennzeichnet, dass** als aromatisches Lösungsmittel Toluol eingesetzt wird.
